# EUROPEAN PATENT APPLICATION

(11) **EP 0 669 286 A1**
(43) Date of publication of application: **30.08.1995**
(21) Application number: 95301186.3
(22) Date of filing: 23.02.1995
(51) Int. Cl.: C02F 1/48

(54) **Method of securing a device for inhibiting scale production by galvanic action, to a pipe**

(30) Priority: 24.02.1994 GB 9403482
(71) Applicant: EIP METALS LIMITED, Birmingham B18 7PZ, West Midlands (GB)
(72) Inventor: Tripp, Anthony John, Sutton Coldfield, West Midlands B75 6RP (GB)
(74) Representative: Lally, William

(57) **Abstract**

A method of securing a device (11) to a pipe (10) to inhibit scale production by galvanic action, comprises a first member (12) adapted to be attached to the exterior of the pipe (10) and a second member (26) engaged with and movable relative to the first member (11) and the pipe (10), the method comprising moving the second member (26) relative to the pipe (10) so as to form an opening in a wall of the pipe (10) until, in use, a metal part (28) of the second member (26) is contacted by fluid in the pipe.

## Description

### Description of Invention

This invention relates to a method of securing a device for inhibiting scale production by galvanic action, to a pipe.

It is known to utilise the principle that dissimilar metals in an electrolyte produce galvanic action, to inhibit the formation of scale in pipework carrying a water supply.

However devices hithertofore proposed which have an anode and a cathode require fitting in the pipework by a skilled plumber, such devices having for examples joints which need to be connected to the ends of adjacent pipe sections.

Furthermore, with some known devices, as the device operates, the anode tends to be sacrificed and eventually requires replacement which with known devices, is difficult.

According to one aspect of the invention we provide a method of securing a device for inhibiting scale production by galvanic action, to a pipe, wherein the device comprises a first member which is adapted to be attached relative to the exterior of the pipe, and a second member engaged with and movable relative to the first member and having at least a part of metal, the method comprising attaching the first member relative to the exterior of the pipe, moving the second member relative to the first member and the pipe such that the second member forms an opening in a wall of the pipe and so that the metal part of the second member is, in use, contacted by fluid in the pipe.

According to a second aspect of the invention, we provide a device for inhibiting scale production by galvanic action, in a pipe, wherein the device comprises a first member which is adapted to be attached relative to the exterior of the pipe, and a second member engaged with and movable relative to the first member and having at least a part of metal, the second member being movable relative to the first member such that the second member forms an opening in a wall of the pipe and so that the metal part of the second member is in use contacted by fluid flowing through the pipe.

According to a third aspect of the invention, we provide a pipework construction including a pipe having secured thereto a device according to the second aspect of the invention.

Embodiments of devices according to the invention will now be described, by way of example only, with reference to the accompanying drawings in which:
FIGURE 1 is a cross section through a pipe to which is secured one embodiment of a device according to the invention for inhibiting scale production galvanic action,
FIGURE 2 is a cross-section through a pipe to which is secured an alternative embodiment of such a device, and,
FIGURE 3 is a cross-section through an alternative form of active element of devices according to the invention.

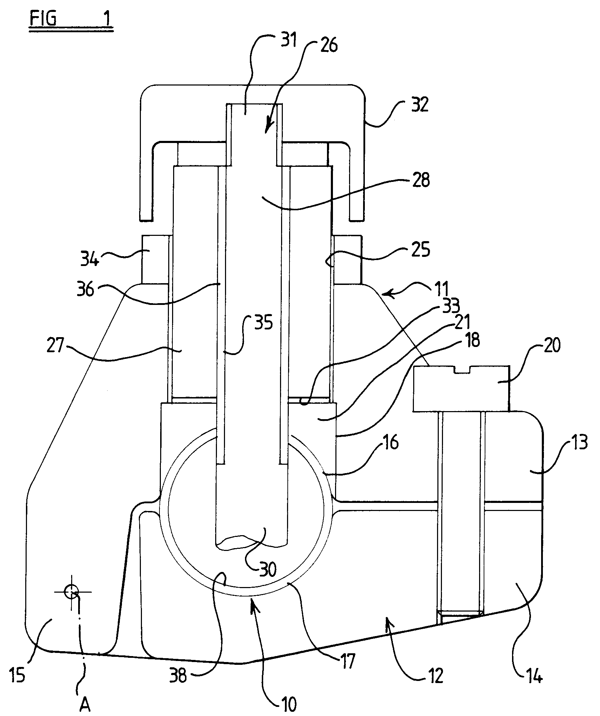

Referring to figure 1, there is shown a pipe 10 of a pipework construction, the pipe 10 in this example being made of copper, but it will be appreciated from what is said below, that the pipe 10 could be made of another metal, or even plastics.

A device 11 for inhibiting scale production in the pipe, by galvanic action, is secured to the pipe 10. The device 11 comprises a first member 12, which in this example is made predominantly of metal i.e. brass and may be chrome plated or otherwise suitably finished. The first member 12 comprises two elements 13 and 14 which are connected together by a hinge 15 for relative movement about an axis A to permit the elements 13 and 14 to be moved apart such that the pipe 10 can be accommodated between the two elements 13,14. Each of the elements 13,14, has a recess 16,17, respectively of a configuration matching the configuration of the external wall of the pipe 10. The element 13 further has an enlarged recess portion 18, the purpose of which will become apparent hereinafter.

The elements 13 and 14 can be closed together around the pipe 10, and a fastener 20 is provided, comprising a bolt, to draw the two elements 13 and 14 together thus to clamp the pipe 10 between the two elements 13 and 14.

Within the enlarged recess portion 18, there is provided a saddle shaped sealing member 21 which has a central opening 23. When the two elements 13 and 14 of the first member are clamped around the pipe 10, the sealing member 21 becomes compressed between the pipe 10 and the element 13.

Extending through one of the elements 13 of the first member 12 is a passageway 25. The device 11 comprises a second member 26 which is received within the passageway 25 and is movable therein.

The second member 26 comprises a carrier 27 made in this example, in metal, an active part 28 also made of metal, but a metal dissimilar from the copper of the pipe 10, and a tip 30. The tip 30 may be made of the same metal as the active part 28 and thus form part of the active part 28. Alternatively, it may be made of a different material. The material of the tip 30 must be sufficiently hard to be able to cut through the copper pipe 10 as described below.

The carrier 27 has externally, a male thread, whilst the passageway 25 through the first member 12 has a matching female thread, and so by rotating the second member 26 relative to the first member 12, in one sense of rotation, the second member 26 moves from a position in which the tip 30 is spaced away from the pipe 10, towards and into contact with the external wall of the pipe 10. Rotation is facilitated in that a square formation 31 is provided at an end of the active element 28 remote from the tip 30, and the square formation 31 can be engaged by a suitable tool, such as a spanner. When not in use, the square formation 31 is concealed by means of a plastic protective cap which is indicated at 32. Other forms of formation 31 for engagement with other tools may be utilised. Such formations may be provided on active element 28, or on the carrier 27 as desired.

It will be seen in the drawing that the tip 30 is shaped such that upon continued rotation of the second member 26 in the passageway 25, when the tip 30 is in contact with the exterior wall of the pipe, the tip 30 will cut an opening in the pipe wall. Yet further movement of the second member 26 will cause the tip 30 to move to the position shown in the drawing within the pipe 10, such that the active element 28 is contacted by fluid in and flowing through the pipe 10.

Furthermore, as a step 33 of the carrier 27 engages the sealing member 21, this will further compress the sealing member 21 and thus improve the seal between the pipe wall and the first and second members 12,26, such that water flowing in the pipe 10 cannot escape from the pipe 10 between the active element 28 and the pipe wall.

The active element 28 is of a generally solid construction having no passageway therethrough.

A locking ring 34 is provided which surrounds the carrier 27 and has a female thread corresponding to the male thread of the carrier 27. The locking ring 34 can be tightened onto the element 13 of the first member 12 to lock the second member 26 relative to the first member 12.

It can be seen that the active element 28 has a reduced diameter portion 35. Between the active element 28 and the carrier 27 there is thus provided an annular aperture. A tube 36 of insulating material is provided around the active element 28 in the reduced diameter portion 35 such that at least when the active element 28 is in the position shown in the drawing, the active element 28 is completely insulated from the carrier 27 and hence from the first member 12 and from pipe 10.

It will be appreciated that water flowing through the pipe 10, particularly hard water, tends to be a mild electrolyte. This electrolyte will thus be in contact with the active element 28, and with the interior of the pipe wall. By virtue of the presence of the electrolyte, galvanic action will thus occur between the active element 28, and the interior of the wall of the pipe 10. This galvanic action effectively ionises the minerals present in the water flowing through the pipe thus preventing scale forming within the pipe 10.

Thus the invention enables simple fitting of the device 11 to a pipe 10 which can be achieved by the average DIY amateur plumber. It is envisaged that it may not even be necessary to turn off the water supply flowing through the pipe 10 before securing the device 11 to the pipe 10.

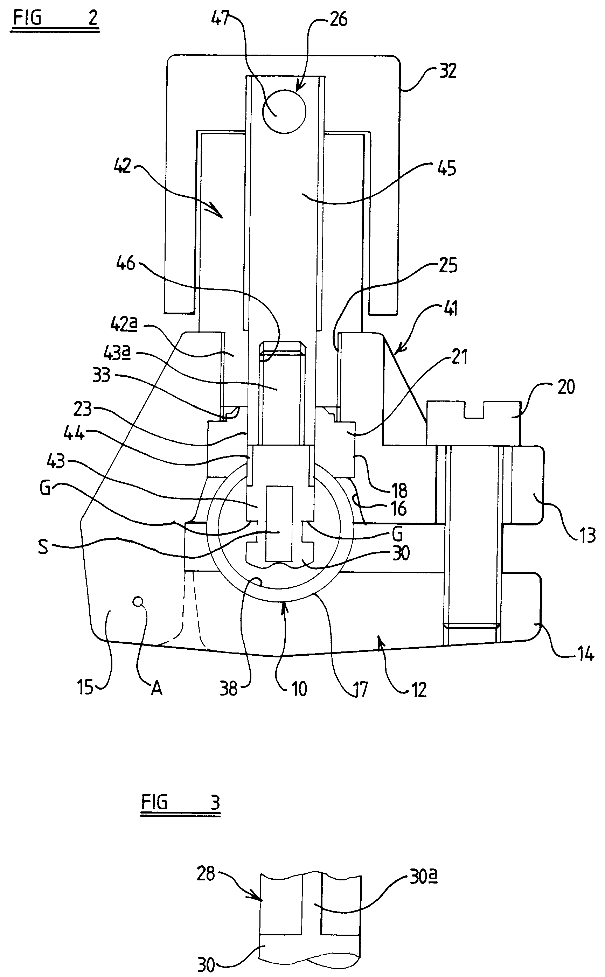

The active element 28 may be made of any dissimilar metal to the copper pipe 10. Preferably the tip 30 is a metal such as for example type 410 stainless steel which contains 13% chromium, or else stainless steel type 304 or stainless steel type 316 which contains molybdenum, as these metals are sufficiently hard to cut copper and are suitable for permanent installation in a domestic water supply. The active element 28 may also be made totally of one of these metals and incorporate the tip 30. Alternatively, the active element 28 it may be made of another metal preferably zinc, as shown in figure 3, where the tip 30 and a stem 30a of sufficient strength to transmit the torque for installation are made of stainless steel and the active element 28 comprises a sleeve of zinc. The second member 26 may take any form which provides a suitable tip and a suitable active element.

As a further alternative, at least part of the active element 28 may be coated with a noble metal such as platinum, gold or silver.

Where the pipe 10 is made of a material other than copper, the active element 28 of the second member may be made of a suitably selected dissimilar metal to give mild galvanic action without severe corrosion.

It is also envisaged that the second member 26 may be made predominantly of a suitable plastics material such that it would not be necessary to provide insulation 36 between the active element 28 and the carrier 27. In this event, the active element 28 may comprise a metal part which may be bonded, keyed, or both, to the remainder of the plastics second member 26.

In this event, the second member may comprise a unitary plastic member to which the active element 28 is secured.

If desired, the first member 11 may be made of a suitable plastics material. However, in each case, where the second member 26 is made of an electrically conducting material, insulation is required to insulate the metal part of the second element 26 relative to the carrier 27 where the first member 12 which is in electrical contact with the pipe 10, is also made of an electrically conducting material.

Whereas in the above example the galvanic action occurs between the metal of the pipe 10 and the active element 28 of the second member 26, particularly but not exclusively where the pipe 10 is made from an insulating material such as plastics, or a less noble metal than copper, it is envisaged that a pair of devices would be secured relative to the pipe 10 in close proximity, with the active part of one of the devices being made of a dissimilar metal to the active part of the other device, so that galvanic action occurs between the active parts of the two devices. Alternatively, the active element 28 may be made in two parts, each comprising dissimilar metals, insulated electrically from one another so that galvanic action occurs between the two parts.

Referring now to figure 2, an alternative embodiment of a device 41 for inhibiting scale production in the pipe 10, by galvanic action, is illustrated. Parts common to those illustrated in figure 1 are like referenced and will not be described. The second member 26 comprises a carrier 42 made in this example in nylon, an active element 43, made of a metal dissimilar to that of pipe 10, a semi-insulating element being in this example a short sleeve 44 made of a semi-insulator material, a central portion 45 formed of brass and a tip 30. The central portion 45 has a recess 46 formed in its lower end and bearing a female thread, the active element 43 has a narrower portion 43a at its upper end formed with a male thread and the active element 43 is attached to the central portion 45 by means of these threads. The short sleeve 44 is located around the active element 43 prior to the connection of the active element 43 to the central portion 45.

The carrier 42 comprises a lower narrower portion 42a which has externally, a male thread, which locates in the passageway 25 through the first member 12 which has a matching female thread. Thus, by rotating the second member 26 relative to the first member 12, in one sense of rotation, the second member 26 moves from a position in which the tip 30 is spaced from the pipe 10, towards and into contact with the external wall of the pipe 10.

Further movement of the tip 30 and active element 43 is achieved by rotation of the central portion 45 which bears an external thread along its upper outer surfaces and locates in a female thread within the carrier 42. Rotation of the central portion 45 is facilitated by a through hole 47 adjacent its upper end into which a rod or other tool may be inserted. As the central portion 45 is rotated with respect of the carrier 42 the tip 30 cuts through the exterior wall of the pipe 10 and can be moved into the position shown in figure 2. It will be noted that in this position, the short sleeve 44 prevents direct contact between the active element 43 and the pipe 10. Once the narrow portion 42a of the carrier 42 is fully within the passageway 25 the step 33 of the carrier 42 engages with the sealing member 21, compressing the sealing member 21 and improving the seal between the pipe wall and first and second members 12,26, such that fluid flowing in the pipe 10 cannot escape from the pipe.

The semi-insulator material of the short sleeve 44 permits flow of a small current thus providing an external circuit between the active element 43 and the pipe 10, this improves the scale inhibiting properties of the device 41. Suitable materials for the short sleeve 44 are, for example plastics shaped to produce a suitable conductivity. The active element 43 has machined therein slots S and grooves G to increase its surface area, and thus further improve the scale inhibiting properties, and to improve the liquid flow around it when in use.

Alternative embodiments of devices according to the invention may be constructed in which a connection is provided between the pipe and the active element by different means to that described above.

Preferably the construction of the devices 11,41, is such that it is not possible to move the second members 26 relative to the first members 12 such an amount that the tips 30 contact an inner surface 38 of the pipe 10 opposite to where the openings are formed in the pipe wall by the tips 30.

It is envisaged that a light emitting diode or a neon lamp could be provided, for example incorporated into the protective cosmetic caps 32 and in electrical contact with the active elements 28,43 and the pipes 10 (e.g. via the first members 12), or even with the carriers 27,42, where carriers 27,42 and first members 12 are each made of electrically conducting materials and in contact with one another. The L.E.D. or lamp will glow to show that the devices 11,41, are generating an electric current.

Instead of the first member 12 comprising two elements 13 and 14 pivotally connected such that the first member 12 can be received around the pipe 10, other arrangements in which, for example, the two elements are entirely separable, may be provided. In yet another arrangement, the first member 12 may be attached to a wall adjacent the pipe 10 rather than actually around the pipe 10 as in the example described.

The devices 11,42, when fitted, are entirely maintenance fee, although where the active elements 28,43 are made of a metal which corrodes significantly, by turning off the water supply to the pipes 10, and unscrewing the carriers 27,42, the second members 26 may be replaced. Alternatively, when the second members 26 are removed from the pipes, the first elements 12 may be removed from the pipes by releasing the fasteners 20, such that the entire devices 11,41, may be replaced by a new such device.

To prevent the escape of water from pipes 10 via the opening, whether or not the water supply to the pipe is turned off, the devices 11,41, may incorporate a barrel type valve which may be closed as the active elements 28,43 are withdrawn from the opening, to prevent water passing along the passageway 25.

Preferably the copper of the pipes 10 is in use the anode. Because of the relatively large area of the pipes 10 compared with the area of the tips 30, corrosion of the pipe due to the galvanic action of the devices 11,41, will not seriously damage the pipes over a very long period of time.

## Claims

1. A method of securing a device (11;41) for inhibiting scale production by galvanic action, to a pipe (10), characterised in that the device (11;41) comprises a first member (12) which is adapted to be attached relative to the exterior of the pipe, and a second member (26) engaged with and movable relative to the first member (12) and having at least a part of metal (28;43), the method comprising attaching the first member (12) relative to the exterior of the pipe, moving the second member (26) relative to the first member (12) and the pipe (10) such that the second member (26) forms an opening in a wall of the pipe and so that the metal part (28;43) of the second member (26) is, in use, contacted by fluid in the pipe (10).

2. A device (11;41) for inhibiting scale production by galvanic action, in a pipe (10), characterised in that the device (11;41) comprises a first member (12) which is adapted to be attached relative to the exterior of the pipe, and a second member (26) engaged with and movable relative to the first member (12) and having at least a part of metal (28;43), the second member (26) being movable relative to the first member (12) such that the second member (26) forms an opening in a wall of the pipe (10) and so that the metal part (28;43) of the second member (26) is in use contacted by fluid flowing through the pipe (10).

3. A device according to claim 2 characterised in that the pipe (10) is made of a first metal, the first member (12) is made substantially of a metal similar to the metal of the pipe (10) and the metal part (28;43) of the second member (26) is of a dissimilar metal.

4. A device according to claim 2 or claim 3 characterised in that the second member (26) is electrically insulated from the first member (12).

5. A device according to claim 2 or 3 characterised in that in use the pipe (10) and the metal part (43) of the second member (26) are connected by a semi-insulating element (44).

6. A device according to any one of claims 2 to 5 characterised in that the first member (12) is adapted to be secured relative to the exterior of the pipe (10) by clamp means, the first member (12) comprising at least two elements (13,14) which are relatively movable or separable to permit the pipe (10) to be received between them, and means (20) are provided to secure the two elements around the pipe (10) thus to clamp the pipe (10) between the two elements (13,14) such that the first member (12) is in contact with an exterior wall of the pipe (10).

7. A device according to any one of claims 2 to 6 characterised in that the second member (26) is received in a passage (25) through the first member (12) and is movable generally laterally of the pipe (10), the second member (26) having a male thread and the passage (25) of the first member (12) a female thread, relative rotation between the first and second members (12,26) in one sense of rotation from a position in which the second member (26) is spaced away from the exterior of the pipe wall, causing the second member (26) to move towards and into engagement with the pipe wall.

8. A device according to claim 7 characterised in that the second member (26) comprises a tip formation (30), adapted to cut through the pipe wall as the second member (26) is rotated relative to the first member (12) and a carrier (27;42) which engages with the first member (12) and an active element (28;43) comprising the metal part.

9. A device according to claim 8 characterised in that the active element (28) is electrically insulated from the carrier (27) of the second member (26), the carrier (27) being made predominantly of an insulating material or being made of an electrically conducting material and insulation (36) being provided between the active element (28) and the carrier (27).

10. A device according to any one of claims 2 to 9 characterised in that the second member (26) comprises a generally solid construction such that fluid cannot escape from the pipe (10) through the second member (26) and in that the device includes a seal (21) which in use surrounds the opening formed in the pipe wall, the seal (21) in use becoming compressed between the pipe wall and the second member (26) as the second member (26) is moved relative to the first member (12) beyond the position in which the opening is formed in the pipe wall.

11. A pipework construction including a pipe having secured thereto a device according to any one of claims 2 to 10.
